# FASCICULE DE BREVET EUROPEEN

(11) **EP 3 494 007 B1**
(45) Date de publication et mention de la délivrance du brevet: **09.03.2022**
(21) Numéro de dépôt: 17754390.7
(22) Date de dépôt: 12.07.2017
(51) Int. Cl.: B60M 1/24

(54) **SYSTÈME DE RACCORDEMENT DE DEUX FILS DE CONTACT DE CATÉNAIRE**
SYSTEM ZUR VERBINDUNG VON ZWEI FAHRLEITUNGSKONTAKTDRÄHTEN
SYSTEM FOR CONNECTING TWO CATENARY CONTACT WIRES

(30) Priorité: 05.08.2016 FR 1657619
(43) Date de publication de la demande: 12.06.2019
(73) Titulaire: 4NRJ, 41330 Villefrancoeur (FR)
(72) Inventeur: GASSELIN, Benoît, 41000 Blois (FR)
(74) Mandataire: Gicquel, Frédéric
(86) Numéro de dépôt international: PCT/FR2017/051915
(87) Numéro de publication internationale: WO 2018/024956

(56) Documents cités:
- EP-A1- 1 468 866
- DE-B- 1 104 990
- FR-A5- 2 048 164
- JP-A- 2006 056 337
- US-A- 1 448 195
- IRSIGLER M ET AL: "ANWENDUNG VON PRESSVERBINDUNGEN IN OBERLEITUNGSANLAGEN DER OESTERREICHISCHEN BUNDESBAHNEN", EB- ELEKTRISCHE BAHNEN, DIV-DEUTSCHER INDUSTRIEVERLAG, DE, vol. 90, no. 3, 1 March 1992 (1992-03-01), pages 87-91, XP000264450, ISSN: 0013-5437

## Description

Le domaine de l'invention est celui de la conception et de la fabrication d'équipements de maintenance de voies de chemin de fer. Plus précisément, l'invention concerne un système pour l'installation, l'entretien et/ou la réparation des fils de contact d'une caténaire.

Un fil de contact est un fil conducteur destiné à assurer un moyen d'alimentation électrique aérien d'une locomotive, d'un tramway, ou encore d'un trolleybus. De tels véhicules présentent des pantographes qui viennent en frottement sur la face inférieure du fil de contact pour pouvoir établir un contact électrique.

Lors de l'installation d'une caténaire et du fil de contact, un raccordement des différentes sections du fil de contact (soit plusieurs fils de contact mis bout à bout) doit être réalisé pour pouvoir établir un contact électrique en continu. Une fois en service, les fils de contact sont soumis à une usure importante et il peut être nécessaire de réaliser le remplacement d'une section d'une ligne continue de fils de contact, dès lors que cette section présente une usure trop importante.

Il existe ainsi des systèmes qui permettent de raccorder ensemble deux fils de contact de caténaire mis bout à bout.

Un premier système de raccordement de fil de contact décrit par l'art antérieur consiste en des griffes de jonction boulonnées. Un tel système est par exemple décrit dans le document de brevet FR2845648A1.

Une griffe de jonction boulonnée comporte deux griffes en cuivre haute résistance qui sont plaquées sur les extrémités des deux fils de contact mis bout à bout, et qui sont serrées de manière à déformer les fils de contact pour les emprisonner et les maintenir ensemble.

Plus précisément, chaque griffe présente une denture destinée à pénétrer dans le matériau des fils de contact. Ces deux griffes sont alors positionnées de part et d'autre d'un fil de contact et sont serrées les unes contre les autres grâce à des boulons. Ces boulons doivent être serrés de manière à ce que les dentures des deux griffes pénètrent dans le matériau des fils. Par « pénétrer », il faut comprendre que les griffes déforment le matériau des fils de contact, au point de s'ancrer dans ces fils de contact.

Une telle griffe de jonction boulonnée a des inconvénients. En effet, ce type de griffe présente un poids de l'ordre d'un kilogramme et il est difficile de descendre en dessous de ce poids. Cela est en particulier dû au fait que chaque griffe doit avoir une conception lui permettant de supporter les efforts de serrage tout en déformant les fils de contact ; c'est-à-dire en n'étant pas elle-même déformée par ces efforts.

Le poids de la griffe de jonction boulonnée résulte aussi du nombre important de boulons et de la taille importante de ces boulons qui doivent permettre le serrage des griffes l'une contre l'autre et la déformation des fils de contact. On peut noter qu'un défaut de serrage entraîne une mauvaise tenue des fils de contact mis bout à bout.

Le poids de la griffe de jonction boulonnée, relativement important, provoque une usure prématurée des fils de contact sous la griffe, et induit un risque de rupture du fil de contact par fatigue.

L'art antérieur propose une deuxième solution qui consiste en une griffe de jonction sertie. Une telle griffe sertie est composée d'un profilé qui comprend une denture dans sa partie inférieure. Le plaquage de la griffe sur le fil de contact est alors réalisé par sertissage. Plus précisément, cette griffe de jonction sertie est destinée à recouvrir la partie supérieure des deux fils de contact mis bout à bout, pour dégager une face inférieure des fils de contact sur laquelle sont destinés à venir en contact des pantographes de locomotives.

Une telle griffe de jonction est particulièrement avantageuse. En effet, ce type de griffe présente un poids inférieur jusqu'à environ 70% à celui d'une griffe boulonnée précédemment décrite. Ce gain de poids permet de ralentir l'usure des fils de contact sous la griffe dû au poids de la griffe, et diminue le risque de rupture du fil de contact par fatigue.

Cette griffe de jonction sertie présente néanmoins des inconvénients. En effet, la mise en œuvre de cette griffe de jonction sertie est difficile. L'opération de sertissage, plus précisément, nécessite une presse de sertissage d'une puissance d'environ 20 tonnes. De plus, cette presse de sertissage nécessite de réaliser un nombre important de passes de sertissage (le nombre de quatorze passes étant assez classique) pour pouvoir sertir et griffer le profilé denté sur les fils de contact mis bout à bout. En conséquence le temps de pause est important.

Selon un autre inconvénient, ces nombreux sertissages entraînent une déformation en arc du raccordement. L'opération de sertissage doit alors être suivie d'une opération de redressage préalablement à la remise en service de la ligne, ce qui s'avère chronophage.

On connaît aussi le système de raccordement décrit dans le document de brevet publié sous le numéro JP 2006 056337 A. Ce système comporte deux pièces latérales formant une mâchoire. Ces pièces latérales présentent des dents triangulaires destinées à former des rainures triangulaires sur les fils de contact puis à s'ancrer dans ces rainures.

Les deux pièces latérales de ce système sont couplées ensemble par l'intermédiaire de rivets. Lors de la compression du dispositif entre deux mors, les dents triangulaires de chaque pièce latérale vont mordre les fils de contact jusqu'à une profondeur adéquate, et les rivets sont déformés de manière à coupler définitivement les deux pièces latérales ensemble.

Comme pour les griffes de jonction boulonnées, chaque pièce latérale doit avoir une conception lui permettant de déformer les fils de contact sans être elle-même déformée par ces efforts. Une telle conception nécessite l'utilisation d'un matériau, apte à supporter les efforts de serrage, entraînant un poids important pour la pièce latérale.

On connaît encore le document de brevet publié sous le numéro FR 2 048 164 A5. Ce document décrit un dispositif de raccordement de fils de contact de caténaires qui comporte des griffes de jonction présentant des dentures destinés à s'ancrer dans les fils de contact. Ces griffes de jonction présentent des stries inclinées au niveau de leur denture, ces stries étant destinées à améliorer l'accrochage des griffes sur les fils de contact.

Tel qu'évoqué précédemment, de telles griffes de jonction présentent un poids important résultant du fait que chaque griffe doit avoir une conception lui permettant de supporter les efforts de serrage tout en déformant les fils de contact.

On connaît aussi le système de raccordement décrit dans le document EP 1 468 866 A1. Ce document décrit un corps de couplage avec un outil de serrage pour le corps de couplage. Cet outil ne permet pas la mise en forme du fil de contact avant le montage.

L'invention a notamment pour objectif de pallier les inconvénients de l'art antérieur.

Plus précisément, l'invention a pour objectif de proposer une solution de raccordement de deux fils contact de caténaire, qui permette d'assurer convenablement le raccordement tout en nécessitant un temps d'installation réduit comparativement à celui nécessaire pour installer une griffe de jonction sertie.

L'invention a également pour objectif de proposer un système de raccordement qui ne provoque pas d'usure prématurée des fils de contact raccordés.

Ces objectifs, ainsi que d'autres qui apparaîtront par la suite, sont atteints grâce à l'invention qui a pour objet un système de raccordement de deux fils de contact de caténaire, le système comprenant un corps de couplage apte à accueillir et à retenir ensemble deux fils de contact mis bout à bout, le corps de couplage présentant, pour chacun des fils de contact, un premier relief d'accrochage, caractérisé en ce qu'il comporte un outil de préparation des fils de contact, indépendant du corps de couplage, l'outil de préparation comportant :
- une matrice de mise en forme présentant un relief de déformation identique au premier relief d'accrochage ;
- des moyens de compression couplés à la matrice de mise en forme pour la serrer sur un fil de contact et déformer le fil de contact de manière à ce qu'il présente un deuxième relief d'accrochage, complémentaire du premier relief d'accrochage, le corps de couplage étant rapporté sur les fils de contact après retrait de l'outil de préparation,
l'outil de préparation étant dédié à la réalisation de chaque deuxième relief d'accrochage sur les fils de contact, le corps de couplage étant destiné à réaliser le raccordement grâce aux premiers reliefs d'accrochage qu'il présente.

Grâce à un tel système de raccordement, on a un outil de préparation qui est dédié à la réalisation d'un deuxième relief d'accrochage sur les fils de contact, et un corps de couplage qui est destiné à réaliser le raccordement grâce au premier relief d'accrochage qu'il présente. En d'autres termes, le corps de couplage n'a aucunement vocation à réaliser, par déformation, le deuxième relief d'accrochage sur les fils de contact. En conséquence, le corps de couplage peut être conçu plus léger qu'un système employant une griffe de jonction boulonnée, telle que décrite précédemment par l'art antérieur.

Le corps de couplage peut donc être conçu en présentant un volume moindre et/ou un poids diminué significativement par rapport à une griffe de jonction boulonnée qui doit être resserrée sur le fil pour déformer les fils de contact et s'ancrer sur ces fils de contact.

On peut par exemple citer une différence de matériaux dans la conception du corps de couplage. En effet, un corps de couplage selon l'art antérieur nécessite l'utilisation de cuivre haute résistance, ce qui est indispensable pour que la denture de la griffe de jonction présente une dureté supérieure à la dureté du fil de contact. Le corps de couplage du système selon l'invention peut quant à lui être réalisé dans une matière plus légère qui sert uniquement à la tenue en traction et à la conductibilité électrique.

Par ailleurs, le système de raccordement présente un temps de mise en œuvre qui est sensiblement identique à celui nécessaire pour installer une griffe de jonction boulonnée. Il en résulte que le système selon l'invention reproduit des avantages des griffes de jonction serties tout en étant moins chronophage qu'un système mettant en œuvre une telle griffe de jonction sertie.

Préférentiellement, le corps de couplage comporte :
- deux mâchoires complémentaires l'une de l'autre, destinées à être positionnées de part et d'autre des deux extrémités mises bout à bout de deux fils de contact devant être raccordés ;
- des moyens d'assemblage et de maintien dans une position assemblée des deux mâchoires de manière à accueillir et à retenir ensemble les deux fils de contact.

Selon cette conception qui emploie deux mâchoires, la réalisation même du couplage, subséquente à la préparation des fils de contact, se réalise de manière simple et rapide. En effet, le corps de couplage doit seulement être assemblé sur les deux extrémités des fils de contact mis bout à bout, puis resserré de manière à maintenir les deux mâchoires assemblées.

Selon une caractéristique avantageuse, pour chaque fil de contact, le deuxième relief d'accrochage est réparti sur deux faces opposées.

Grâce à la répartition sur les deux faces opposées du deuxième relief décrochage, pour chaque fil de contact, les efforts s'exerçant entre les fils de contact et le corps de couplage sont optimisés. Plus précisément, on ne retrouve pas un effort d'accrochage qui ne serait situé que d'un seul côté du fil de contact.

Selon un mode de réalisation préféré, les mâchoires sont identiques l'une de l'autre.

Grâce à des mâchoires identiques l'une de l'autre, le poids du corps de couplage peut être équilibré vis-à-vis des deux fils de contact raccordés. En effet, les fils de contact ne sont alors pas, ou à tout le moins peu, déséquilibrés d'un côté ou de l'autre côté. Cet équilibre permet d'éviter une usure prématurée des fils de contacts raccordés par le système selon l'invention.

Selon une variante de réalisation, les moyens d'assemblage et de maintien dans une position assemblée sont constitués par une unique paire de boulons.

Grâce à la conception du corps de couplage et à ses fonctions (accueil des deux fils de contact et rétention des deux fils de contact grâce à la coopération des premiers reliefs d'accrochage avec les deuxièmes reliefs d'accrochage), les moyens d'assemblage et de maintien dans une position assemblés n'ont que la fonction de maintenir les deux mâchoires l'une contre l'autre. Ces moyens d'assemblage et de maintien sont alors différents de ce que permettent et de ce à quoi sont destinés les boulons utilisés dans un système de griffe de jonction boulonnée. En effet, dans une griffe de jonction boulonnée, les boulons sont conçus et dimensionnés de manière à pouvoir resserrer une griffe sur des fils de contact et exercer un effort de serrage suffisant pour pouvoir griffer les fils de contact grâce aux dentures de la griffe.

En conséquence, dans un système selon l'invention, une unique paire de boulons, rapide à installer et n'entraînant pas un poids important, suffit à constituer les moyens d'assemblage et de maintien dans une position assemblée des deux mâchoires.

Avantageusement, les moyens d'assemblage et de maintien dans une position assemblée comprennent des boulons à rupture de couple.

De tels boulons à rupture de coupe permettent de simplifier l'intervention des personnes réalisant l'installation du système de raccordement selon l'invention du fait qu'ils n'ont pas besoin de recourir à une clé dynamométrique.

Selon une caractéristique préférentielle, les moyens d'assemblage et de maintien dans une position assemblée comportent une rondelle d'autofreinage pour chaque boulon.

De telles rondelles d'auto freinage permettent d'empêcher les boulons de se dévisser. Ces rondelles d'auto freinage présentent un poids bien inférieur à celui des contre écrous qui doivent être utilisés dans les systèmes de raccordement employant des griffes boulonnées. En effet, sur une griffe boulonnée les boulons doivent être pourvus de premiers écrous qui sont serrés de manière suffisante pour réaliser la déformation et le couplage des griffes sur les fils de contact, puis des deuxièmes boulons sont vissés pardessus les premiers boulons pour maintenir l'effort de serrage.

Ainsi, à la différence de cette conception selon l'art antérieur, le système de raccordement selon l'invention permet d'utiliser une rondelle d'auto freinage, plus légère qu'un contre-écrou, positionnée en amont d'un écrou sur un boulon.

Préférentiellement, les moyens de compression comportent une presse autonome portative.

Un outil de préparation comportant une presse autonome portative permet à des opérateurs mettant en œuvre le système de raccordement selon l'invention de réaliser de manière rapide et efficace un raccordement, en l'absence de tout équipement lourd.

L'invention concerne également un procédé de raccordement de deux fils de contact de caténaire, mettant en œuvre un système de raccordement tel que décrit précédemment, caractérisé en ce qu'il comprend les étapes de :
- déformation de deux fils de contact d'une caténaire à l'aide d'un outil de préparation des fils de contact, de façon à ce qu'ils présentent chacun un deuxième relief d'accrochage complémentaire d'un des premiers reliefs d'accrochage d'un corps de couplage ;
- couplage du corps de couplage sur les deux fils de contact, les premiers reliefs d'accrochage du corps de couplage s'encastrant dans les deuxièmes reliefs d'accrochage des fils de contact, et retenant les fils de contact mis bout à bout l'un par rapport à l'autre.

Un tel procédé permet de réaliser un raccordement de deux fils de contact avec un temps de réalisation dudit raccordement particulièrement avantageux.

En effet, grâce à une étape préalable de déformation des deux fils de contact de manière à ce qu'ils présentent chacun un deuxième relief d'accrochage, le temps de réalisation du raccordement peut-être identique à celui nécessaire à la réalisation d'une griffe boulonnée. Ce temps de réalisation est ainsi plus rapide que celui nécessaire pour la mise en place d'une griffe de jonction sertie dans laquelle plus d'une dizaine de passes de sertissage sont nécessaires pour réaliser un raccordement correct des deux fils de contact.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique d'un raccordement obtenu grâce à un système selon l'invention ;
- la figure 2a est une représentation schématique d'un outil de préparation du système selon l'invention, sans presse autonome portative représentée ;
- la figure 2b est une représentation schématique de l'outil de préparation du système selon l'invention, avec une presse autonome portative représentée ;
- la figure 3 est une représentation schématique d'un outil de préparation en phase de déformation d'un fil de contact pour qu'il présente un deuxième relief d'accrochage ;
- la figure 4 est une représentation schématique d'un fil de contact présentant un deuxième relief d'accrochage suite à l'utilisation de l'outil de préparation ;
- la figure 5 est une représentation schématique d'une mâchoire d'un corps de couplage ;
- la figure 6 est une représentation schématique d'un corps de couplage en phase d'être rapporté sur des fils de contact de caténaire.

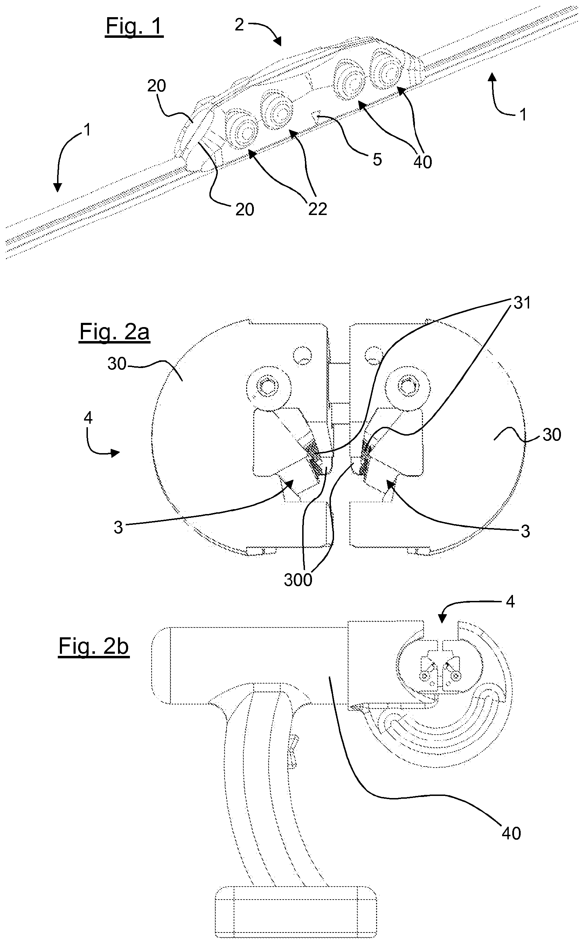

En référence à la figure 1, le système de raccordement de deux fils de contact de caténaire selon l'invention, permet de raccorder les extrémités de deux fils de contact 1 mis bout à bout. Ce système de raccordement comprend un corps de couplage 2 qui accueille et qui retient ensemble les deux extrémités du fil de contact.

Tel que cela va être explicité plus en détails par la suite, le corps de couplage est apte à retenir ensemble les deux fils de contact grâce à des premiers reliefs d'accrochage que ce corps de couplage présente pour chacun des fils de contact, ces fils de contact présentant quant à eux, chacun, un deuxième relief d'accrochage, complémentaire d'un des premiers reliefs d'accrochage.

Selon le principe de l'invention, les deuxièmes reliefs d'accrochage présentés par chacun des fils de contact, sont réalisés sans avoir recours au corps de couplage.

En effet, le système de raccordement comporte un outil de préparation des fils de contact, indépendant du corps de couplage.

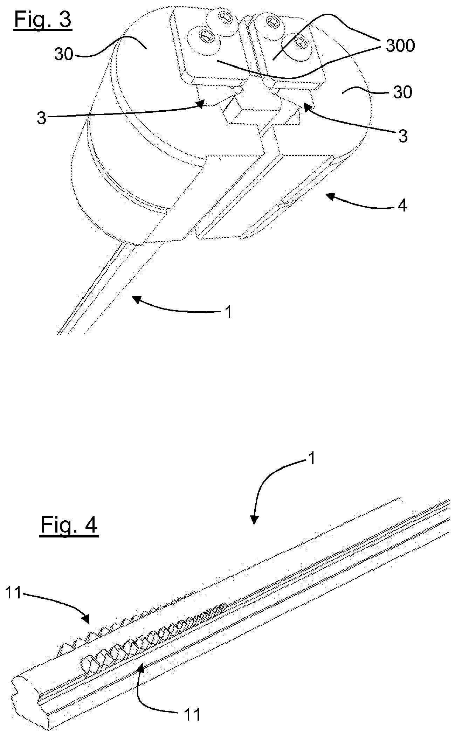

Cet outil de préparation, illustré par les figures 2a et 3, comporte :
- une matrice de mise en forme 3 ;
- un moyen de compression 4 couplé à la matrice de mise en forme.

La matrice de mise en forme 3 présente un relief de déformation 31 identique au premier relief d'accrochage.

Le moyen de compression 4, quant à lui, permet de serrer la matrice de mise en forme sur un fil de contact de manière à déformer le fil de contact pour qu'il présente un deuxième relief d'accrochage. Ce deuxième relief d'accrochage est ainsi complémentaire du relief de déformation et également, par conséquent, complémentaire du premier relief d'accrochage.

Tel qu'illustré par les figures 2a et 3, l'outil de préparation permet de préparer un fil de contact 1. Plus précisément, l'outil de préparation présente un logement dans lequel une extrémité d'un fil de contact 1 est insérée jusqu'à ce qu'elle vienne en butée contre deux plaques 300.

A l'intérieur de ce logement, tel qu'illustré par la figure 2a, la matrice de mise en forme 3 présente un relief de déformation 31. Ce relief de déformation 31 se décompose en deux parties identiques l'une de l'autre.

Ainsi, tel qu'illustré par la figure 4, un fil de contact 1 présente, suite à une préparation à l'aide d'un outil de préparation, un deuxième relief d'accrochage 11 qui est réparti sur deux faces opposées.

En référence à la figure 2a, la matrice de mise en forme 3 est portée par deux blocs supports 30. Ces blocs supports 30 sont destinés à être appliqués l'un contre l'autre par l'intermédiaire des moyens de compression 4. Tel qu'illustré par la figure 2b, les moyens de compression 4 comportent une presse autonome portative 40.

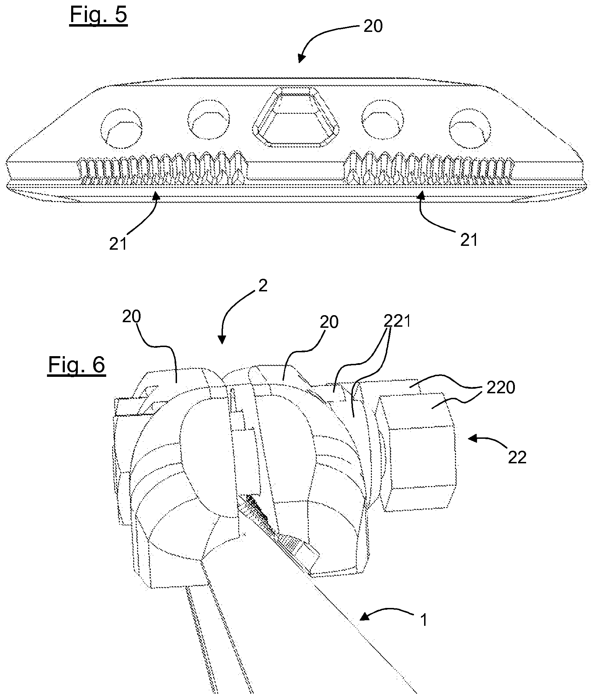

Tel que l'on peut l'observer sur les figures 1, 5 et 6, le corps de couplage comporte deux mâchoires 20 qui sont complémentaires l'une de l'autre. Ces mâchoires sont notamment identiques l'une de l'autre. En référence aux figures 1 et 6, ces deux mâchoires 20 doivent être positionnées de part et d'autre des deux extrémités mises bout à bout de deux fils de contact 1 qui doivent être raccordés.

Tel qu'illustré par ces figures, le corps de couplage comporte alors des moyens d'assemblage et de maintien dans une position assemblée 21 des deux mâchoires de manière à accueillir et à retenir ensemble les deux fils de contact.

Selon le présent mode de réalisation illustré par la figure 5, chaque mâchoire présente une partie du premier relief d'accrochage 21 destinée à s'assembler avec le deuxième relief d'accrochage 11 présenté par chaque fil de contact 1 (en référence à la figure 4).

En référence aux figures 4 et 5, on observe que les premiers reliefs d'accrochage 21 et le deuxième relief d'accrochage 11 de chaque fil de contact 1, correspondent à des dents espacées par des logements. Ces dents et ces logements sont ainsi disposés alternativement sur chaque relief, et présentent une disposition inversée, complémentaire, entre le premier relief d'accrochage et le deuxième relief d'accrochage. En d'autres termes, les dents de l'un du premier ou du deuxième relief d'accrochage viennent s'ancrer dans les logements de l'autre du premier ou du deuxième relief d'accrochage.

Tel qu'illustré par la figure 6, les moyens d'assemblage et de maintien dans une position assemblée 22 comprennent des boulons 220 à rupture de couple. Dans ce mode de réalisation on observe que les moyens d'assemblage et de maintien dans une position assemblée comportent une rondelle d'auto freinage 221 pour chaque boulon. Selon un autre mode de réalisation non illustré, les moyens d'assemblage et de maintien dans une position assemblée sont constitués par une unique paire de boulons.

Selon une autre caractéristique du système, illustrée par la figure 1, le corps de couplage 2 présente un repère visuel de positionnement 5. Ce repère indique à une personne réalisant le raccordement la distance à laquelle doivent se rejoindre les deux fils de contact 1. Ce repère permet de s'assurer que les reliefs d'accrochages des fils de contact et du corps de couplage sont bien positionnés en vis-à-vis.

Tel qu'expliqué précédemment l'invention concerne également un procédé de raccordement de deux fils de contact de caténaire. Ce procédé met en œuvre le système de raccordement précédemment décrit.

Le procédé de raccordement comprend deux étapes successives décrites ci-après.

Dans une première étape, dite étape de déformation, deux fils de contact d'une caténaire sont déformés à l'aide de l'outil de préparation des fils de contact. Cette déformation consiste à créer sur chaque fil de contact un deuxième relief d'accrochage qui sera complémentaire des premiers reliefs d'accrochage du corps de couplage.

Dans une deuxième étape, dite étape de couplage, le corps de couplage est couplé sur les deux fils de contact mis bout à bout. Les premiers reliefs d'accrochage du corps de couplage s'encastrent alors dans les deuxièmes reliefs d'accrochage des fils de contact. Les premiers reliefs d'accrochage du corps de couplage retiennent ainsi les fils de contact mis bout à bout l'un par rapport à l'autre.

## Revendications

1. Système de raccordement de deux fils de contact (1) de caténaire, le système comprenant un corps de couplage (2) apte à accueillir et à retenir ensemble deux fils de contact mis bout à bout, le corps de couplage présentant, pour chacun des fils de contact, un premier relief d'accrochage (21),
**caractérisé en ce qu'**il comporte un outil de préparation des fils de contact, indépendant du corps de couplage, l'outil de préparation comportant :
- une matrice de mise en forme (3) présentant un relief de déformation (31) identique au premier relief d'accrochage ;
- des moyens de compression (4) couplés à la matrice de mise en forme pour la serrer sur un fil de contact et déformer le fil de contact de manière à ce qu'il présente un deuxième relief d'accrochage (11), complémentaire du premier relief d'accrochage, le corps de couplage étant rapporté sur les fils de contact après retrait de l'outil de préparation,
l'outil de préparation étant dédié à la réalisation de chaque deuxième relief d'accrochage sur les fils de contact, le corps de couplage étant destiné à réaliser le raccordement grâce aux premiers reliefs d'accrochage qu'il présente.

2. Système de raccordement selon la revendication 1, **caractérisé en ce que** le corps de couplage (2) comporte :
- deux mâchoires (20) complémentaires l'une de l'autre, destinées à être positionnées de part et d'autre des deux extrémités mises bout à bout de deux fils de contact (1) devant être raccordés ;
- des moyens d'assemblage et de maintien dans une position assemblée (22) des deux mâchoires de manière à accueillir et à retenir ensemble les deux fils de contact.

3. Système de raccordement selon la revendication 2, **caractérisé en ce que**, pour chaque fil de contact (1), le deuxième relief d'accrochage (11) est réparti sur deux faces opposées.

4. Système de raccordement selon l'une quelconque des revendications 2 et 3, **caractérisé en ce que** les mâchoires (20) sont identiques l'une de l'autre.

5. Système de raccordement selon l'une quelconque des revendications 2 à 4, **caractérisé en ce que** les moyens d'assemblage et de maintien dans une position assemblée (22) sont constitués par une unique paire de boulons (220).

6. Système de raccordement selon l'une quelconque des revendications 2 à 5, **caractérisé en ce que** les moyens d'assemblage et de maintien dans une position assemblée (22) comprennent des boulons (220) à rupture de couple.

7. Système de raccordement selon l'une quelconque des revendications 5 et 6, **caractérisé en ce que** les moyens d'assemblage et de maintien dans une position assemblée (22) comportent une rondelle d'autofreinage (221) pour chaque boulon (220).

8. Système de raccordement selon l'une quelconque des revendications précédentes, **caractérisé en ce que** les moyens de compression (4) comportent une presse autonome portative (40).

9. Procédé de raccordement de deux fils de contact (1) de caténaire, mettant en œuvre un système de raccordement selon l'une quelconque des revendications précédentes, **caractérisé en ce qu'**il comprend les étapes de :
- déformation de deux fils de contact d'une caténaire à l'aide d'un outil de préparation des fils de contact, de façon à ce qu'ils présentent chacun un deuxième relief d'accrochage (11) complémentaire d'un des premiers reliefs d'accrochage (21) d'un corps de couplage (2) ;
- couplage du corps de couplage sur les deux fils de contact, les premiers reliefs d'accrochage du corps de couplage s'encastrant dans les deuxièmes reliefs d'accrochage des fils de contact, et retenant les fils de contact mis bout à bout l'un par rapport à l'autre.

## Patentansprüche

1. Verbindungssystem von zwei Fahrdrähten (1) einer Oberleitung, wobei das System einen Kupplungskörper (2) umfasst, der geeignet ist, zwei aneinandergefügte Fahrdrähte aufzunehmen und gemeinsam zu halten, wobei der Kupplungskörper für jeden der Fahrdrähte ein erstes Einhakrelief (21) aufweist,
**dadurch gekennzeichnet, dass** er ein Werkzeug zur Vorbereitung der Fahrdrähte umfasst, das vom Kupplungskörper unabhängig ist, wobei das Werkzeug zur Vorbereitung Folgendes umfasst:
- eine Formgebungsmatrize (3), die ein Verformungsrelief (31) aufweist, das mit dem ersten Einhakrelief identisch ist;
- Druckmittel (4), die mit der Formgebungsmatrize gekoppelt sind, um sie an einem Fahrdraht festzuklemmen und den Fahrdraht so zu verformen, dass er ein zweites Einhakrelief (11) aufweist, das komplementär zum ersten Einhakrelief ist, wobei der Kupplungskörper nach dem Entfernen des Werkzeugs zur Vorbereitung auf die Fahrdrähte aufgesetzt wird,
wobei das Werkzeug zur Vorbereitung der Herstellung jedes zweiten Einhakreliefs auf den Fahrdrähten gewidmet ist, wobei der Kupplungskörper dazu bestimmt ist, die Verbindung dank der ersten Einhakreliefs, die er aufweist, herzustellen.

2. Verbindungssystem nach Anspruch 1, **dadurch gekennzeichnet, dass** der Kupplungskörper (2) umfasst:
- zwei zueinander komplementäre Backen (20), die dazu bestimmt sind, auf beiden Seiten der beiden aneinandergefügten Enden von zwei zu verbindenden Fahrdrähten (1) positioniert zu werden;
- Mittel zum Zusammenbau und zum Halten der beiden Backen in einer zusammengebauten Position (22), um die beiden Fahrdrähte zu erfassen und zusammenzuhalten.

3. Verbindungssystem nach Anspruch 2, **dadurch gekennzeichnet, dass** für jeden Fahrdraht (1) das zweite Einhakrelief (11) auf zwei gegenüberliegende Seiten verteilt ist.

4. Verbindungssystem nach einem der Ansprüche 2 und 3, **dadurch gekennzeichnet, dass** die Backen (20) untereinander identisch sind.

5. Verbindungssystem nach einem der Ansprüche 2 bis 4, **dadurch gekennzeichnet, dass** die Mittel zum Zusammenbau und zum Halten in einer zusammengebauten Position (22) aus einem einzigen Paar Bolzen (220) bestehen.

6. Verbindungssystem nach einem der Ansprüche 2 bis 5, **dadurch gekennzeichnet, dass** die Mittel zum Zusammenbau und zum Halten in einer zusammengebauten Position (22) aus Bolzen (220) mit Drehmomentunterbrechung bestehen.

7. Verbindungssystem nach einem der Ansprüche 5 und 6, **dadurch gekennzeichnet, dass** die Mittel zum Zusammenbau und zum Halten in einer zusammengebauten Position (22) eine selbstbremsende Unterlegscheibe (221) für jeden Bolzen (220) umfassen.

8. Verbindungssystem nach einem der vorhergehenden Ansprüche, **dadurch gekennzeichnet, dass** die Mittel zum Komprimieren (4) eine tragbare, autonome Presse (40) umfassen.

9. Verfahren zum Verbinden von zwei Fahrdrähten (1) einer Oberleitung, bei dem ein Verbindungssystem nach einem der vorhergehenden Ansprüche eingesetzt wird, **dadurch gekennzeichnet, dass** es die folgenden Schritte umfasst:
- Verformung von zwei Fahrdrähten einer Oberleitung mit Hilfe eines Werkzeugs zur Vorbereitung der Fahrdrähte, so dass sie jeweils ein zweites Einhakrelief (11) komplementär zu einem der ersten Einhakreliefs (12) eines Kupplungskörpers (2) aufweisen;
- Kuppeln des Kupplungskörpers an die beiden Fahrdrähte, wobei die ersten Einhakreliefs des Kupplungskörpers in die zweiten Einhakreliefs der Fahrdrähte einrasten und die aneinandergefügten Fahrdrähte zueinander zurückhalten.

## Claims

1. A system for connecting two catenary contact wires (1), the system comprising a coupling body (2) adapted to accommodate and retain together two contact wires placed end-to-end, the coupling body having, for each of the contact wires, a first hooking relief (21), **characterised in that** it includes a tool for preparing the contact wires, independent of the coupling body, the preparation tool including:
- a shaping die (3) having a deformation relief (31) identical to the first hooking relief;
- compression means (4) coupled to the shaping die to clamp it on a contact wire and deform the contact wire so that it has a second hooking relief (11), complementary with the first hooking relief, the coupling body being attached on the contact wires after removal of the preparation tool, the preparation tool being dedicated to making of each second hooking relief on the contact wires, the coupling body being intended to make the connection thanks to the first hooking reliefs that it has.

2. The connection system according to claim 1, **characterised in that** the coupling body (2) includes:
- two jaws (20) complementary with each other, intended to be positioned on either side of the two ends placed end-to-end of two contact wires (1) to be connected;
- means for assembling and holding in an assembled position (22) the two jaws so as to accommodate and retain together the two contact wires.

3. The connection system according to claim 2, **characterised in that**, for each contact wire (1), the second hooking relief (11) is distributed over two opposite faces.

4. The connection system according to any one of claims 2 and 3, **characterised in that** the jaws (20) are identical to each other.

5. The connection system according to any one of claims 2 to 4, **characterised in that** the means for assembling and holding in an assembled position (22) consist of a unique pair of bolts (220).

6. The connection system according to any one of claims 2 to 5, **characterised in that** the means for assembling and holding in an assembled position (22) comprise torque-shear bolts (220).

7. The connection system according to any one of claims 5 and 6, **characterised in that** the means for assembling and holding in an assembled position (22) comprise a torque-shear washer (221) for each bolt (220).

8. The connection system according to any one of the preceding claims, **characterised in that** the compression means (4) include a portable standalone press (40).

9. A method for connecting two catenary contact wires (1), implementing a connection system according to any one of the preceding claims, **characterised in that** it comprises the steps of:
- deforming two contact wires of a catenary using a tool for preparing the contact wires, so that each has a second hooking relief (11) complementary with one of the first hooking reliefs (21) of a coupling body (2);
- coupling the coupling body on the two contact wires, the first hooking reliefs of the coupling body fitting into the second hooking reliefs of the contact wires, and retaining the contact wires placed end-to-end relative to each other.
